# EUROPEAN PATENT APPLICATION

(11) **EP 4 262 030 A1**
(43) Date of publication of application: **18.10.2023**
(21) Application number: 22169712.1
(22) Date of filing: 25.04.2022
(51) Int. Cl.: H01R 13/514, H01R 13/66, H01R 25/00, H01R 35/04

(54) **A MODULE OF A MODULAR POWER STRIP, MODULAR POWER STRIP AND A METHOD FOR SELECTING A MODULE OF A MODULAR POWER STRIP**

(30) Priority: 13.04.2022 US 202263362905 P
(71) Applicant: Thiink, LLC, San Fransisco, CA 94108 (US)
(72) Inventor: Rostedt, Patrik, 245 92 Staffanstorp (SE); Hjelm, Johan, San Fransisco, 94108 (US)
(74) Representative: AWA Sweden AB

(57) **Abstract**

The present disclosure relates to a module (100) of a modular power strip (200) comprising a plurality of interconnectable modules. The module (100) comprises: one or more output interfaces (102), each output interface (102) comprising a module identification transmitter (102a), an output AC power connection (102b) and an output data bus (102c); and an input interface (104) comprising a module identification receiver (104a), an input AC power connection (104b) and an input data bus (104c); wherein the input interface (104) is configured to be connected to an output interface (102) of one neighboring module among the plurality of interconnectable modules; wherein the one or more output interfaces (102) are configured to be connected to an input interface of one neighboring module among the plurality of interconnectable modules; wherein the module identification transmitter (102a) of each of the one or more output interfaces (102) is configured to transmit a module identifier of the module (100) to a neighboring module being connected to the output interface (102) and wherein the module identification receiver (104a) of the input interface (104) is configured to detect a module identifier of a neighboring module being connected to the input interface (104); wherein the module (100) further comprises a control unit (106) configured to execute: a neighbor detection function configured to keep record of module identifier(s) of one or more neighboring modules connected to the one or more output interfaces (102) of the module or to the input interface (104) of the module (100).

## Description

### Technical field

The present invention relates to the field of electrical power strips. More particularly, it relates to a module of a modular power strip, the modular power strip, as well as a method related thereto.

### Background of the invention

Power strips have long been widely used in homes, offices, industries, public spaces etc. As society becomes increasingly reliant on electrical power to power our electrical devices, such as appliances, computers, phones and tablets. The need for power strips or other ways of making the electricity network more accessible increases as well.

Even though the power strip as commonly known hasn't changed much in the last years, the needs of the user have. For example, an increased variety of electronic devices requires a greater flexibility in regard for charging options. In addition, new type of functionalities is requested with the introduction of Internet of Things, loT.

It is therefore a need for improvements when it comes to improved functionalities of power strips as well as mitigation of problems arising with these new functionalities of power strips.

### Summary of the invention

In view of the above, it is an object of the present invention to provide an improved module of a modular powers strip comprising a plurality of interconnectable modules.

The inventors have realized a module and modular power strip comprising a plurality of modules with improved modularity and effectiveness in regard to data communication and power consumption. The present inventive concept builds upon a modular power strip having no master module. Instead, modules of the modular power strip may enable decentralized communication and control. This may allow for an effective use of data communication. At the same time, it may facilitate a simple set-up and use for a user of the modular power strip.

According to a first aspect, there is provided a module of a modular power strip comprising a plurality of interconnectable modules. The module comprises one or more output interfaces, each output interface comprising a module identification transmitter, an output AC power connection and an output data bus; and an input interface comprising a module identification receiver, an input AC power connection and an input data bus; wherein the input interface is configured to be connected to an output interface of one neighboring module among the plurality of interconnectable modules; wherein the one or more output interfaces are configured to be connected to an input interface of one neighboring module among the plurality of interconnectable modules; wherein the module identification transmitter of each of the one or more output interfaces is configured to transmit a module identifier of the module to a neighboring module being connected to the output interface and wherein the module identification receiver of the input interface is configured to detect a module identifier of a neighboring module being connected to the input interface; wherein the module further comprises a control unit configured to execute: a neighbor detection function configured to keep record of module identifier(s) of one or more neighboring modules being connected to the one or more output interfaces of the module or to the input interface of the module.

By the wording "output interface" it is hereby meant an output connectable to an input interface of another module. Correspondingly, by the wording "input interface" it is hereby meant an input connectable to an output interface of another module. The output interface and input interface may together form a data link or data pass-through between two modules, e.g. by the data bus and module identification transmitter and receiver respectively. The output interface and input interface may together form a power pass-through, e.g. by the output and input AC power connection respectively.

An output interface of one module is preferably physically connectable to an input interface of another module. Hence, modular power strip may be assembled. The physical connection between two modules may be a releasable physical connection. Hence, a rearrangement of the modules may be made.

The output and input interface of the module allows power supplied from a neighboring module connected to the input interface be passed through to any neighboring modules connected to the one or more output interface. Thus, a modular power strip comprising a plurality of interconnectable modules need only to have one single incoming power cord. Further, data may be transmitted between the modules through the input and output interfaces.

By the wording "module identifier" it is hereby meant a unique identifier of the module. The module identifier may comprise additional information pertaining to the module.

By the wording "keep record of module identifier(s)" it is hereby meant storing the module identifier(s) of current neighboring modules, and thus updating the record if neighboring modules are added or removed.

The module may have the ability to detect all of its neighbors and their positions in a modular power strip, and to detect the modular power strips setup. Without the need for manual configuration or setups by a user, the module may communicate its module identifier (e.g. its capabilities when it comes to communication with other devices) to other modules of the modular powers strip. This may be advantageous both in that the module can be used by itself, or in any combination with other modules.

The module may comprise a single input interface. This facilitates in keeping record on the layout of a modular power strip comprising a plurality of modules.

The module may comprise one or more external interfaces selected from a group comprising of an AC power outlet, a DC power outlet, an inductive charger, a wireless network unit, a wired network unit, an ON/OFF switch, a lighting unit and a loudspeaker unit. A modular power strip may thus be formed by a plurality of different modules each having its own feature.

By the wording "external interface" it is hereby meant any form of functional feature of the module. The interface may be "external" in the sense that it interacts with external devices or a user of the module. As stated above, the external interface may for example be an AC or DC power outlet configured to receive an external electrical cable. As other non-limiting example, the external interface may provide information to the user, or be an ON/OFF switch operatable by the user.

The wording "type of module" may be used below to refer to modules having different external interface, i.e. different types of external interfaces.

The AC power outlet, DC power outlet and inductive charger may provide for different ways of supplying electrical power to devices connected to the module.

The wireless network unit and wired network unit may provide for different ways of amplifying or supplying a network connection, e.g. an internet connection.

The module may comprise two or more external interfaces selected from a group comprising of an AC power outlet, a DC power outlet, an inductive charger, a wireless network unit, a wired network unit, an ON/OFF switch, a lighting unit and a loudspeaker unit.

The module may comprise two or more external interfaces of the same type. The module may comprise two or more external interfaces of different types.

The module identifier may comprise information pertaining to characteristics of the module.

Characteristics of the module may comprise information about the module, such as metadata, what type of module it is (e.g. what external interface is comprises), what ways of communication the module has, working conditions of the module etc.

The module may comprise a power measuring unit configured to measure a power consumption of the module and any device connected thereto via an AC power outlet, an DC power outlet or an inductive charger of the module. The power measuring unit may be configured to measure a power take-off made by a device connected to an external interface.

The power measuring unit should be interpreted as a measuring unit configured to measure a power consumption of or power take-off from the module, as well as any device connected thereto.

The module identification transmitter may be a near field communication, NFC, tag, and wherein the module identification receiver may be an NFC reader.

It should be noted that the module identification transmitter may be the NFC reader and the module identification receiver may be the NFC tag.

The wording "NFC tag" should not be seen as limiting the module identification transmitter or receiver to be a passive communicator. The wording "NFC tag" and "NFC reader" are merely used as a common way of describing an NFC communication pair. Both the NFC tag (and thus the module identification transmitter) and the NFC reader (and thus the module identification receiver) may both transmit and receive information. In other words, the module identification transmitter and receiver may form a peer-to-peer NFC communication.

Using the NFC tag/receiver as the module identification transmitter/receiver may be advantageous in that it allows the module to detect and identify a neighbor in an accurate and efficient way. In particular, the NFC tag/reader ensures that the module identifies the correct neighbor in the correct place.

According to a second aspect, there is provided a modular power strip comprising a plurality of interconnected modules. The plurality of interconnected modules are modules according to the first aspect.

The modular power strip may be advantageous in that is provides a highly modular power strip.

The modular power strip may further comprise an external power supply, connected to an input interface of one or the plurality of modules, and configured to supply the modules with power.

The neighbor detection function of the control unit of each module may be further configured to keep record of module identifier(s) of all modules of the modular power strip by communicating over the input and output data bus of each module.

In other words, each module of the modular power strip may know about what other modules are connected together to form the modular power strip.

The modular power strip may have a common communicator configured to communicate with an external user device, and wherein the common communicator may be a control unit of a module selected from the plurality of interconnectable modules.

This may be advantageous in that it provides a single point of contact with external devices. Thus, a process of connecting to the modular power strip for a user, may be simplified. Further, it may reduce congestion on a wireless network. Even further, it may reduce the power consumption of the modular power strip.

Further, each module of the modular power strip may act as the common communicator. This also allows any type of module to be used as a single component in the modular power strip. Thus, the flexibility of the modular power strip is enhanced. In other words, the modular power strip of the present inventive concept may comprise any combination of modules having different external interfaces (e.g. different power outlets, wireless network outputs etc.).

The control unit of each module may be further configured to execute a selection function configured to: at a random point in time, transmit, to each module of the modular power strip, a claim to be the common communicator; and in response to receiving such a claim from another module, select the another module as the common communicator.

Two or more modules of the plurality of interconnected modules may comprise a wireless network unit, wherein the control units of the modules having a wireless network unit may be further configured to execute a deactivation function configured to deactivate the wireless network unit(s) of all but one module.

Deactivating the wireless network units of the modules which are not selected as the common communicator may be advantageous in that the power consumption of the modular power strip is reduced. It may further reduce congestion on the wireless network.

According to a third aspect, there is provided a method for selecting a module of a modular power strip according to the second aspect, as a common communicator of the modular power strip. The method comprising: determining neighboring modules to each module of the modular power strip; communicating all neighbors within the modular power strip, as well as a respective module identifier, to each module, through a data bus shared among the modules of the modular power strip; transmitting, by each module, after a randomly set time interval unique to each module, a claim to be the common communicator; and selecting the module which first transmits the claim as the common communicator for the modular power strip.

The steps of the method may be repeated in response to a new module being added to the modular power strip.

The steps of the method may be repeated at a set interval.

The above-mentioned features and advantages of the first, second and third aspect, when applicable, apply to the fourth aspect as well. To avoid undue repetition, reference is made to the above.

According to a fourth aspect, there is provided a non-transitory computer readable recording medium having recorded thereon program code which when executed at a device having processing capabilities is configured to perform the method according to the third aspect.

Still other objectives, features, aspects, and advantages of the invention will appear from the following detailed description as well as from the drawings. The same features and advantages described with respect to one aspect are applicable to the other aspects unless explicitly stated otherwise.

### Brief description of the drawings

The above and other aspects of the present inventive concept will now be described in more detail, with reference to appended drawings showing variants of the invention. The figures should not be considered limiting the invention to the specific variant; instead they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Fig. 1 schematically illustrates, by way of example, a module of a modular power strip.
Fig. 2a-d illustrates, by way of different examples, a modular power strip of interconnectable modules in a perspective view.
Fig. 3 schematically illustrates, by way of example, a modular power strip of interconnectable modules.
Fig. 4 is a flowchart illustrating the steps of a method for selecting a module of a modular power strip as a common communicator of the modular power strip.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

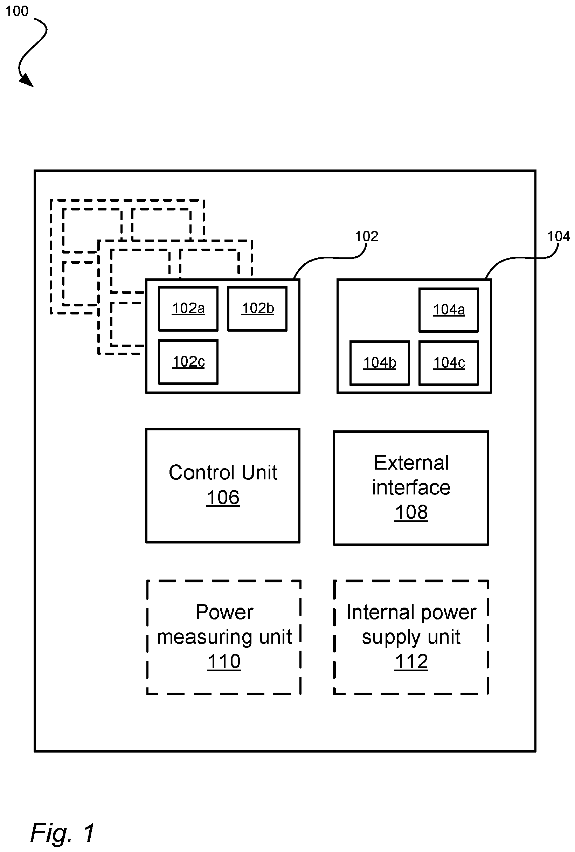

A module of a modular power strip, a modular power strip comprising a plurality of interconnectable modules, as well as a method for selecting a module of the modular power strip as a common communicator of the modular power strip, will now be described with reference to Fig. 1 to Fig. 4.

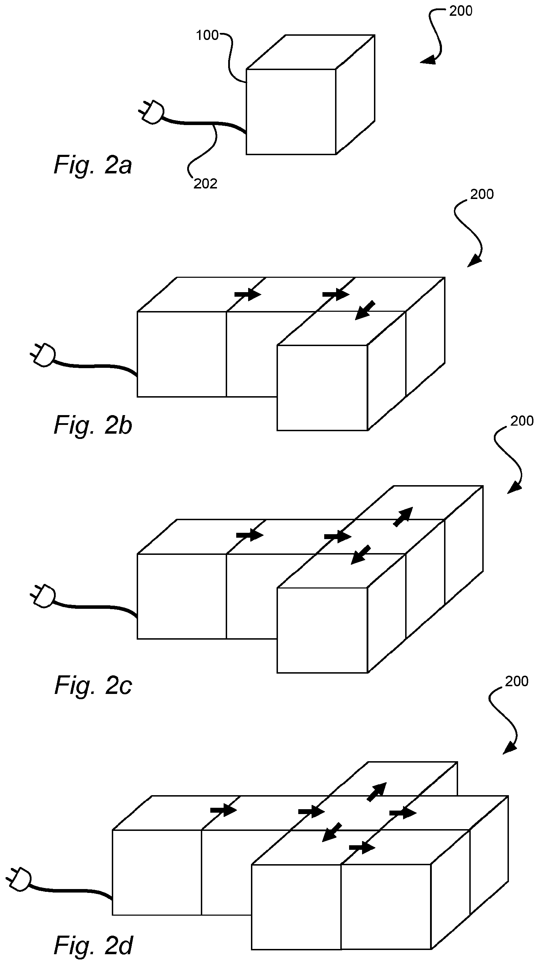

Fig. 1 schematically illustrates, byway of example, the module 100. The module 100 may be interconnectable to other modules to form a modular power strip. An example of the modular power strip comprising a plurality of modules is further described in connection with Fig. 2a to Fig. 3.

The module 100 comprises one or more output interfaces 102. The module 100 comprises at least one output interface 102, as illustrated herein by a first output interface 102 in solid lines. Preferably, the module 100 comprise two or three output interfaces 102. Herein, an optional second and third output interface 102 are illustrated in broken lines. However, the module 100 may comprise any number of output interfaces.

The module 100 comprises an input interface 104. Preferably, the module 100 comprises a single input interface 104. By having a single input interface 104 may prevent short circuits from happening when connecting two or more modules together. When forming the modular power strip of a plurality of modules, there may otherwise be a risk that a user connects them in a way which forms a closed loop. Furthermore, having a single input interface 104 may ensure that no input interface 104 (which could expose hazardous voltages to the user) is exposed to the user, since the input interface 104 of the module 100 may either be connected to an output interface of a neighboring module or to an external power supply (further described below). Even further, having a single input interface 104 may ensure that the module 100 (or the modular power strip) only has one external power supply. Thus, a case where the user disconnects one external power supply and not realizing that a second external power supply may still be powering the module (or modular power strip) can be avoided.

The input interface 104 is configured to be connectable to an output interface of a neighboring module. Correspondingly, the output interface 102 is configured to be connectable to an input interface of another neighboring module. Thus, a modular power strip comprising a plurality of interconnectable modules may be formed by connecting the modules of the plurality of modules by connecting output interfaces with input interfaces. An output interface 102 of one module 100 is preferably physically connectable to an input interface 104 of another module 100. Hence, modular power strip 200 may be assembled. The physical connection between two modules 100 may be a releasable physical connection. Hence, a rearrangement of the modules 100 may be made.

The output interface 102 and the input interface 104 may be configured to allow electrical power and data to pass through between neighboring modules.

Each output interface 102 comprises a module identification transmitter 102a. The module identification transmitter 102a may be configured to transmit a module identifier associated with the module 100. The module identifier may be a unique identifier of the module 100. The module identifier may comprise information pertaining to characteristics of the module 100. For example, the module identifier may comprise information pertaining to what type of module it is, i.e. what external interface the module 100 has. The module identifier may further comprise information pertaining to a status of the module 100, what type of communication protocols it uses etc. Correspondingly, the input interface 104 comprises a module identification receiver 104a. The module identification transmitter 102a may transmit the module identifier to a module identification receiver of a neighboring module. The module identification receiver 104a of the module 100 may receive a module identifier of another neighboring module.

The module identification transmitter 102a may be a near field communication, NFC, tag. The module identification receiver 104a may be an NFC reader. The module identification transmitter 102a and the module identification reader may be peer-to-peer NFC devices. Hence, a module identifier of the module 100 may be transmitted from the module 100 to a neighboring module connected to the output interface 102 through the module identification transmitter 102a. Alternatively, or in combination, a module identifier of the neighboring module connected to the output interface 102 of the module 100 may be received by the module identification transmitter 102a. The same may apply to the input interface 104. The module identifier of the module 100 may be transmitted to a neighboring module connected to the input interface 104 by the module identification receiver 104a. Alternatively, or in combination, a module identifier of the neighboring module connected to the input interface 104 may be received by the module identification receiver 104a.

The module identification transmitter 102a and/or the module identification receiver 104a may further be configured to transmit the module identifier to a user device. For example, the module identifier may be transmitted by NFC to the user device, if the user device is placed within an NFC range of the module 100. Other data or information may also be transmitted to or received from the user device through NFC.

Each output interface 102 further comprises an output AC power connection 102b. Correspondingly, the input interface 104 comprises an input AC power connection 104b. The input and output AC power connections 102b, 104b may thus form an electrical connection between modules connected to each other through their input and output interfaces 102, 104.

Output AC power connections 102b of output interfaces 102 which are not connected to an input interface of a neighboring module may be switched of for increased safety.

Each output interface 102 further comprises an output data bus 102c. Correspondingly, the input interface 104 further comprises an input data bus 104c. The output and input data bus 102c, 104c may form a common data bus over all modules connected together in a modular power strip. Hence, data may be transmitted between the modules over a wired common network. The modular power strip is further discussed below in connection with Fig. 2a to 3.

Alternatively, the module 100 may be enabled to communicate wirelessly. For example, the module 100 may communicate over a wireless common network between modules of a modular power strip. The module 100 may communicate with other modules or external user devices through one or more wireless network unit(s). The one or more wireless network units may for example communicate over Bluetooth, Bluetooth Low energy (BLE), Wi-Fi, Thread, Ethernet, Single Pair Ethernet and NFC.

By using Wi-Fi, the module 100 may expose a software enabled access point for simple detection and commissioning by a user device such as a phone, tablet or computer. When commissioned, the module may connect to a given Wi-Fi network for direct communication with the user device. The module 100 may support multiple standard protocols to communicate with both cloud-servers and user devices, such as HTTPS, MQTT, SNTP etc.

The module 100 may offer multiple BLE interfaces (endpoints) for communication directly to user devices. BLE may be used both for commissioning and control. The module 100 may act as a node in BLE mesh network.

Thread technologies may be used to support mesh networking with standard protocols, such as Matter.

Preferably, Single Pair Ethernet may be used for intercommunication between connected modules as it can facilitate high performance without cluttering the radio space. Use of standard Ethernet protocol may be used to facilitate both intercommunication between modules, but also to route ethernet communication between Wi-Fi and ethernet. The module may be connected to an external ethernet infrastructure.

The module 100 further comprises a control unit 106. The control unit 106 may comprise circuitry. The circuitry may be any type of circuitry comprising a processing unit. The circuitry may physically comprise one single circuitry device. Alternatively, the circuitry may be distributed over several circuitry devices. The control unit 106 may further comprise a transceiver and a memory.

The circuitry may be configured to carry out overall control of functions and operations of the control unit 106, and thus also the module 100. The circuitry may include a processor, such as a central processing unit (CPU), microcontroller, or microprocessor. The processor may be configured to execute program code stored in the memory, in order to carry out functions and operations of the circuitry.

The transceiver may be configured to enable the control unit 106 to communicate with other modules.

The memory may be one or more of a buffer, a flash memory, a hard drive, a removable media, a volatile memory, a non-volatile memory, a random access memory (RAM), or another suitable device. In a typical arrangement, the memory may include a non-volatile memory for long term data storage and a volatile memory that functions as system memory for the control unit or the module 100 itself. The memory may exchange data with the circuitry over a data bus. Accompanying control lines and an address bus between the memory and the circuitry also may be present.

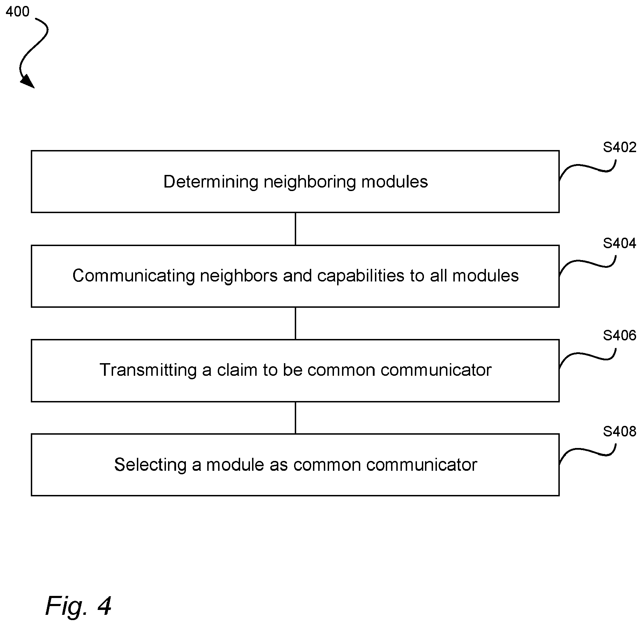

Functions and operations of the control unit 106 may be embodied in the form of executable logic routines (e.g., lines of code, software programs, etc.) that are stored on a non-transitory computer readable recording medium (e.g., the memory) of the module 100 and are executed by the control unit 106, or more specifically the circuitry (e.g. using the processor) of the control unit 106. Furthermore, the functions and operations of the control unit 106 may be a stand-alone software application or form a part of a software application that carries out additional tasks related to the control unit 106. The described functions and operations may be considered a method that the control unit 106 is configured to carry out. Such as the method 400 discussed below in connection with Fig. 4. Also, while the described functions and operations may be implemented in software, such functionality may as well be carried out via dedicated hardware or firmware, or some combination of hardware, firmware and/or software. The following functions may be stored on the non-transitory computer readable recording medium.

The control unit 106 is configured to execute a neighbor detection function, configured to keep record of module identifier(s) of one or more neighboring modules being connected to the one or more output interfaces 102 of the module 100 or to the input interface 104 of the module 100. Thus, the neighbor detection function allows the module to detect neighboring modules. As described above, the module identifier(s) of the neighboring modules may be received by the module identification receiver 104a and/or module identification transmitter 102a of the input and output interface 104, 102 respectively.

The module 100 may further comprise one or more external interfaces 108. The one or more external interfaces 108 may be selected from a group comprising of an AC power outlet, a DC power outlet, an inductive charger, a wireless network unit, a wired network unit, an ON/OFF switch, a lighting unit and a loudspeaker unit. The module may comprise two or more external interfaces 108 selected from the above mentioned group. As a further example, the one or more external interfaces 108 may be USB-hubs for sharing data between the module 100 and a user device connected thereto.

The AC power outlet and/or the DC power outlet may be ordinary electrical outlets, USB or USB-C outlets or the like for providing electrical power to electronic devices. The inductive charger may in other words be a wireless charger for enabled user devices.

The ON/OFF switch may allow a user to manually turn on or off the module, and all other modules connected to that module.

The lighting unit may serve as an electrical light. The loudspeaker may serve as a speaker for a connected user device.

The wireless network unit may in other words be a Wi-Fi router. The wired network unit may in other words be an Ethernet switch.

The module 100 may receive power from an external power supply connected to the input interface 104 or through a neighboring module or chain of neighboring modules connected to the input interface 104 which in turn is connected to the external power supply.

The module 100 may be used together with the external power supply without any other modules. In other words, the module 100 may have all necessary components to function as a power strip by itself.

The module 100 may further comprise a light emitting diode, LED light source. The module 100 may further comprise one or more buttons for receiving user input. The LED light source and the one or more buttons may facilitate easier user interface and direct control without having to open an app or similar.

The module 100 may further comprise an internal power supply unit 112. The internal power supply unit 112 may be configured to supply components of the module 100 with power from the input AC power connection 104b of the input interface 104. By components, it is hereby meant any electronics in the module 100, such as the control unit 106, the external interface 108, the output and input interface 102, 104 etc.

The module 100 may further comprise a power measuring unit 110. The power measuring unit 110 may be configured to measure a power consumption of the module 100 and any device connected thereto, i.e., connected to the external interface 108. For example, the power measuring unit 110 may measure a power consumption of a device connected to an AC power outlet, an DC power outlet or an inductive charger of the module 100.

Even though not illustrated, the module 100 may comprise additional data buses between the different components described above.

Fig. 2a-d illustrates, by way of different examples, the modular power strip 200 of interconnectable modules 100 in perspective view. The modular power strip 200 may comprise any number of modules 100 and in any suitable configuration. Fig. 2a-d only illustrates four different examples for illustrative purposes.

Fig. 2a illustrates the modular power strip 200 as comprising only one module 100. The module 100 is herein illustrated as a cuboid. However, this should be seen merely as a non-limiting example. It goes without saying that the module 100 may take any suitable shape and size. The modular power strip 200 further comprises an external power supply 202. The external power supply 202 may be connected to an input interface of the module 100, or more specifically to an input AC power connection of the input interface. It goes without saying that the external power supply 202 may be connected to any module of the modular power strip 200 having an available input interface. The external power supply 202 may be configured to supply the modules of the modular power strip 200 with power. For example, the external power supply 202 may be an ordinary electrical plug connectable to an electrical power socket.

Fig. 2b illustrates the modular power strip 200 as comprising four modules. Each module may be of a different type, i.e. have different external interfaces. Alternatively, one or more modules may be of the same type. In this example, each module has no more than two neighbors, one connected to an input interface of the module, and one connected to an output interface of the module. Each module may have only one output interface. The example of Fig. 2b further illustrates that the modules need not be arranged on a straight line. As stated above, the modules of the modular power strip 200 may be arranged in any suitable configuration.

The arrows on the modules of the modular power strip 200 illustrates a possible direction of power supply through the modular power strip 200. In other words, the arrows may be seen as an indication of where an output interface of one module connects to an input interface of another module.

Fig. 2c illustrates the modular power strip 200 as comprising five modules. In this example one of the modules have three neighboring modules. Thus, this illustrated that a module may comprise more than one output interface.

Fig. 2d illustrates the modular power strip 200 as comprising seven modules. In this example one of the modules have four neighboring modules, one connected to its input interface, and three connected to its output interfaces. The example of Fig. 2d further illustrates that modules may be arranged next to each other without being directly connected to each other.

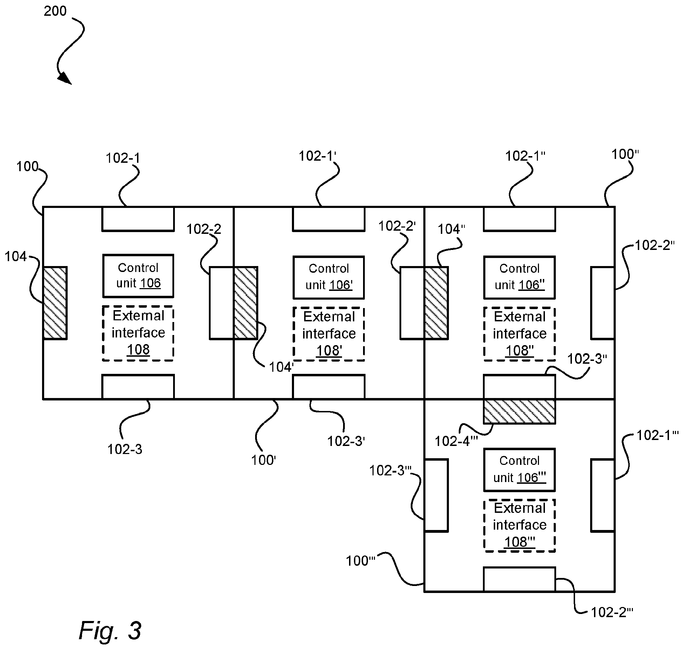

Fig. 3 schematically illustrates, by way of example, the modular power strip 200 of interconnectable modules 100. In this example, the modular power strip 200 has the same configuration as in Fig. 2b. However, as in the case of Fig. 2b, the modular power strip 200 as illustrated in Fig. 3 is to be seen as a non-limiting example.

The modular power strip 200 as illustrated herein comprises a first through fourth module 100, 100', 100", 100‴. Each module may be a module such as the module as described above in connection with Fig. 1. To avoid undue repetition and facilitate ease of understanding, reference will in the following only be made to the first module 100. However, as is readily understood, the same will apply to the second, third and fourth module 100', 100", 100'" as well.

Each module 100, 100', 100", 100'" comprises an input interface 104. Each module further comprises a first, second and third output interface 102-1, 102-2, 102-3. However, the modules of the modular power strip 200 may comprise any number of output interfaces. Further, the modules of the modular power strip may comprise different number of output interfaces.

Each module 100, 100', 100", 100'" further comprises a control unit 106 as described above in connection with Fig. 1. Each module may further comprise one or more external interfaces 108.

Each module 100, 100', 100", 100'" may further comprise a power measuring unit and/or an internal power supply unit.

The input interface 104 and first through third output interface 102-1, 102-2, 102-3 is arranged at their own borders of the module 100. This may facilitate easy connection between the different modules of the modular power strip 200. However, the first through third output interfaces 102-1, 102-2, 102-3 may be arranged at other positions as well. The control unit 106 and external interface 108 are herein illustrated at a center of the first module 100. However, these placements should not necessary be seen as an indication of where they are positioned in the module 100.

The neighbor detection function of the control unit 106, as described above in connection with Fig. 1, may be further configured to keep record of module identifier(s) of all modules of the modular power strip 200 by communicating over the input and output data bus of each module 100, 100', 100", 100‴. Thus, each module 100, 100', 100", 100'" of the modular power strip 200 may know what other modules are part of the modular power strip 200.

The modules 100, 100', 100", 100'" connected to the modular power strip 200 may negotiate a single point of contact with external devices, such as the user device as mentioned above, or other external computers or networks. This may be to simplify the connection for the user, to not congest the wireless networks and to conserve power. In other words, the modular power strip 200 may have a common communicator. The common communicator may be configured to communicate with the external devices. The common communicator may do so by exposing its wireless connection to the external devices. The common communicator may expose and describe all modules of the modular power strip 200. Hence, also exposing all the external interfaces of the modules of the modular power strip 200.

The common communicator may be one of the modules. More specifically, the common communicator may be the control unit of a module selected from the plurality of interconnectable modules of the modular power strip 200.

The control unit of each module may be further configured to execute a selection function configured to: at a random point in time, transmit, to each module of the modular power strip, a claim to be the common communicator; and in response to receiving such a claim from another module, select the another module as the common communicator. Put differently, the module transmits the claim after the random point in time associated with the module, unless the module receives such a claim from another module before that time. Thus, any module of the modular power strip 200 may be selected as the common communicator, and the selection may be made at random.

As described above in connection with Fig. 1, each module may comprise a wireless network module. At least two or more modules of the plurality of interconnected modules may comprise a wireless network unit. The control units of the modules having a wireless network unit may be further configured to execute a deactivation function. The deactivation function may be configured to deactivate the wireless network unit(s) of all but one module of the modular power strip 200. The wireless network unit left activated may be the wireless network unit of the module which is the common communicator. Alternatively, a module other than the common communicator may have its wireless network unit left activated. In such case, that module may receive instructions from the common communicator on what actions to perform.

Fig. 4 is a flow chart illustrating the steps of a method 400 for selecting a module of a modular power strip as a common communicator of the modular power strip. Below, the different steps is described in more detail. Even though illustrated in a specific order, the steps of the method 400 may be performed in any suitable order, in parallel, as well as multiple times.

The modular power strip of which a module is to be selected as common communicator may be the modular power strip as described above in connection with Fig. 1 to 3.

Neighboring modules to each module of the modular power strip is determined S402. What modules are present in the modular power strip (i.e. determining the neighboring modules of each module) may be determined by having each module communicate its module identifier to all other modules upon being connected to the modular power strip.

All neighbors within the modular power strip, as well as a respective module identifier, are communicated S404 to each module. The neighbors as well as a respective module identifier may be communicated S404 through a data bus shared among the modules of the modular power strip.

After a randomly set time interval unique to each module, a claim to be the common communicator is transmitted S406, by each module. The claim may be transmitted to all other modules of the modular power strip. In other words, each module may transmit a claim to be the common communicator after their specific time interval.

The module which first transmits the claim is selected S408 as the common communicator of the modular power strip. In other words, if a module transmits the claim before any other module has done so, that module is selected as the common communicator.

One common communicator may be selected for each communication protocol that the modules of the modular power strip use. One module may be the common communicator for one or more communication protocol. Alternatively, different modules of the modular power strip may be the common communicator of different communication protocols. A communication protocol may for example be Wi-Fi, Bluetooth, USB-connection or any other connection type. Thus, one common communicator may be selected for communicating over Wi-Fi, and another common communicator may be selected for communicating over Bluetooth etc.

Preferably a module having been selected as common communicator may try to remain as the common communicator. This may simplify reconnection of external devices and setups. For example, a module having been selected as the common communicator may be configured to lower its random time interval. This may ensure to keep the same module as the common communicator if the method of selecting a common communicator is repeated, since a lower time interval increases the chances of the module being the first to send the claim. Alternatively, or in combination with the above, the module selected as common communicator may, during re-selection of the common communicator (i.e. repetition of the method), communicate its previous status of being the common communicator to the other modules of the modular power strip. The other modules may, upon receiving such status, select the module sending the status, as the common communicator. Hence, re-selection of the common communicator may most likely end up with the same module being selected as the common communicator.

Together with its previous status, the module may further communicate a timestamp of when it last was the common communicator. This may further improve the selection of the common communicator in the case where two or more modules connected to the modular power strip has previously been the common communicator. This may for example occur if a module has been moved in a modular power strip or connected to another power strip. Based on the timestamp, the module which most recently was the common communicator may be selected as such. The module which most recently was the common communicator may be the preferred common communicator going forward because an external device previously connected to the modular power strip may try to connect to that module first. The timestamp may be a Unix-timestamp UTC. The format of the timestamp may be common to all modules of the modular power strip.

The steps of the method 400 may be repeated in response to a new module being added to the modular power strip. For example, an updated record of all neighbors and their respective module identifiers may be communicated to all modules of the modular power strip. A new common communicator may be selected. However, if a common communicator has already been selected, a new common communicator may not need to be selected each time a new module is added to the modular power strip.

The steps of the method 400 may be repeated at a set time interval. For example, at the set time interval, all neighboring modules may be determined so as to obtain an updated record of all modules and their respective module identifiers of the modular power strip. Further, a new common communicator may be selected at the set time interval.

The method may in other words be described by the following.

On power up of the modular power strip, on a new module being detected at the modular power strip or at a set interval, the module may broadcast its module identifier, its neighbors, and its capabilities. The capabilities may comprise information about what type of module it is, what communication interfaces it has (e.g. Bluetooth, Wi-Fi etc.) and its current status (e.g. connected to Wi-Fi, etc.).

If the module is "hot connected", i.e. connected to a modular power strip already powered up, a common communicator may already be selected. In such case, that common communication may remain as the common communicator.

If the modular power strip is just powered up, all modules may announce their selves (i.e. by its module identifier) and its capabilities during a short time, allowing all modules to wake up and being able to communicate. After this time, each module may use a random time to wait before sending out a claim of being the communicator for the modular power strip. During the wait time, the module listens to other claims, and if another module already claimed the common communicator, the module may cancel its pending claim and not become the communicator.

The module that first claims the common communicator, may be selected as such, set up a wireless communication and inform the other modules of its status.

In this way, only one wireless communication per communication protocol may be used for the entire modular power strip and thus avoiding cluttering of the wireless communication space as well as preserving energy by turning unused wireless communication components off.

Thus, the modular power strip need not to have a defined master controlling a number of slaves. Instead, any module may send a control request to any other module. This may enable efficient communication and open interfaces independent of the setup. For example, a module which is the common communicator can receive control commands from an external device and send this control command to any of the modules connected in the modular power strip. At the same time, a module having e.g. a USB hub as an external interface may get a command from a connected computer, and the USB hub can send similar control commands to any of the other modules.

Additionally, variations to the disclosed variants can be understood and effected by the skilled person in practicing the claimed invention, from a study of the drawings, the disclosure, and the appended claims.

## Claims

1. A module (100) of a modular power strip (200) comprising a plurality of interconnectable modules, wherein the module (100) comprises:
one or more output interfaces (102), each output interface (102) comprising a module identification transmitter (102a), an output AC power connection (102b) and an output data bus (102c); and
an input interface (104) comprising a module identification receiver (104a), an input AC power connection (104b) and an input data bus (104c);
wherein the input interface (104) is configured to be connected to an output interface (102) of one neighboring module among the plurality of interconnectable modules;
wherein the one or more output interfaces (102) are configured to be connected to an input interface of one neighboring module among the plurality of interconnectable modules;
wherein the module identification transmitter (102a) of each of the one or more output interfaces (102) is configured to transmit a module identifier of the module (100) to a neighboring module being connected to the output interface (102) and wherein the module identification receiver (104a) of the input interface (104) is configured to detect a module identifier of a neighboring module being connected to the input interface (104);
wherein the module (100) further comprises a control unit (106) configured to execute:
a neighbor detection function configured to keep record of module identifier(s) of one or more neighboring modules being connected to the one or more output interfaces (102) of the module or to the input interface (104) of the module (100).

2. The module (100) according to claim 1, wherein the module (100) further comprises one or more external interfaces (108) selected from a group comprising of an AC power outlet, a DC power outlet, an inductive charger, a wireless network unit, a wired network unit, an ON/OFF switch, a lighting unit and a loudspeaker unit.

3. The module (100) according to claim 1 or 2, wherein the module (100) comprises two or more external interfaces (108) selected from a group comprising of an AC power outlet, a DC power outlet, an inductive charger, a wireless network unit, a wired network unit, an ON/OFF switch, a lighting unit and a loudspeaker unit.

4. The module (100) according to any one of claims 1 to 3, wherein the module identifier comprises information pertaining to characteristics of the module (100).

5. The module (100) according to any one of claim 1 to 4, wherein the module (100) comprises a power measuring unit (110) configured to measure a power consumption of the module (100) and any device connected thereto via an AC power outlet, an DC power outlet or an inductive charger of the module.

6. The module (100) according to any one of claim 1 to 5, wherein the module identification transmitter (102a) is a near field communication, NFC, tag, and wherein the module identification receiver (104a) is an NFC reader.

7. A modular power strip (200) comprising a plurality of interconnected modules, wherein the plurality of interconnected modules are modules (100) according to any one of claims 1 to 6.

8. The modular power strip (200) according to claim 7, further comprising an external power supply (202), connected to an input interface (104) of one or the plurality of modules, and configured to supply the modules with power.

9. The modular power strip (200) according to claim 7 or 8, wherein the neighbor detection function of the control unit (106) of each module (100) is further configured to keep record of module identifier(s) of all modules of the modular power strip (200) by communicating over the input and output data bus (102c, 104c) of each module.

10. The modular power strip (200) according to any of the claims 7 to 9, wherein the modular power strip (200) has a common communicator configured to communicate with an external user device, and wherein the common communicator is a control unit (106) of a module (100) selected from the plurality of interconnectable modules.

11. The modular power strip (200) according to claim 10, wherein the control unit (106) of each module (100) is further configured to execute a selection function configured to:
at a random point in time, transmit, to each module (100) of the modular power strip (200), a claim to be the common communicator; and
in response to receiving such a claim from another module, select the another module as the common communicator.

12. The modular power strip (200) according to any of the claims 7 to 11, wherein two or more modules (100) of the plurality of interconnected modules comprises a wireless network unit, wherein the control units (106) of the modules (100) having a wireless network unit are further configured to execute a deactivation function configured to deactivate the wireless network unit(s) of all but one module.

13. A method (400) for selecting a module of a modular power strip according to any one of claims 7-12, as a common communicator of the modular power strip, the method (400) comprising:
determining (S402) neighboring modules to each module of the modular power strip;
communicating (S404) all neighbors within the modular power strip, as well as a respective module identifier, to each module, through a data bus shared among the modules of the modular power strip;
transmitting (S406), by each module, after a randomly set time interval unique to each module, a claim to be the common communicator; and
selecting (S408) the module which first transmits the claim as the common communicator for the modular power strip.

14. The method (400) according to claim 13, wherein the steps of the method (400) are repeated in response to a new module being added to the modular power strip.

15. The method (400) according to claim 12 or 13, wherein the steps of the method (400) are repeated at a set interval.
